# EUROPEAN PATENT SPECIFICATION

(11) **EP 3 622 395 B1**
(45) Date of publication and mention of the grant of the patent: **19.08.2026**
(21) Application number: 17734815.8
(22) Date of filing: 11.05.2017
(51) Int. Cl.: G06F 9/48

(54) **METHOD OF MANAGING RESOURCE PROVIDING IN A COMPUTERS CLUSTER RUNNING JOBS**
VERFAHREN ZUR VERWALTUNG DER RESSOURCENBEREITSTELLUNG IN EINEM RECHNERCLUSTER, DER AUFTRÄGE AUSFÜHRT
METHOD OF MANAGING RESOURCES PROVIDING IN A COMPUTERS CLUSTER RUNNING JOBS

(43) Date of publication of application: 18.03.2020
(73) Proprietor: Bull SAS, 78340 Les Clayes-sous-Bois (FR); Commissariat à l'Energie Atomique et aux Energies Alternatives, 75015 Paris (FR)
(72) Inventor: GEORGIOU, Yiannis, 69005 Lyon (FR); GLESSER, David, 38410 Uriage (FR); MERCIER, Michael, 38600 Fontaine (FR)
(74) Representative: Plasseraud IP
(86) International application number: PCT/IB2017/000725
(87) International publication number: WO 2018/206994

(56) References cited:
- WO-A1-2014/101093
- US-A1- 2016 283 270
- US-A1- 2017 109 199
- ANONYMOUS: "Profiling (information science) - Wikipedia", 5 May 2017 (2017-05-05), pages 1 - 7, XP055424072, Retrieved from the Internet <URL:https://en.wikipedia.org/w/index.php?title=Profiling_(information_science)&oldid=778899873> [retrieved on 20171113]

## Description

### FIELD OF THE INVENTION

The invention relates to a method of managing resources providing in a computers cluster running jobs, including a process of scheduling tasks running jobs and utilizing resources in the cluster.

### BACKGROUND OF THE INVENTION

According to a prior art, when managing a computers cluster, since this cluster comprises so many computers, sometimes at least several hundred computers, or even at least several thousand computers, to optimize the scheduling of the numerous tasks to be performed within the cluster is quite difficult.

Indeed, taking into account many parameters, like the number of tasks to be performed, the computing resources required by these tasks, the deadlines associated to these tasks, and when appropriate, all these parameters varying over time, makes scheduling tasks in a computers cluster rather difficult.

A computers cluster needs an effective management of the resources which are limited to perform the required tasks in a satisfactory way within a reasonable time limit. When scheduling tasks, the managing system has to take into account, which kind of jobs are to be run next and which kind of resources are available right now to allow for these jobs to be run next. This matching between running jobs and available resources will allow for a useful and effective, and even optimized way to manage the cluster.

But, since the scheduling process is already rather complicated, the supplementary parameter of matching between running jobs and available resources is not taken into account. This supplementary parameter of matching between running jobs and available resources is considered as too difficult to take into account and not that necessary to manage the cluster in an effective way, and is therefore not used.

Indeed, an algorithm that schedules tasks in a high performance computers cluster is hard to make because the scheduling decisions have to be done quickly according to multiple constraints and should control a possibly large number of computing resources.

Then, taking into account evolving matching between running jobs and available resources is even more difficult because it add some constraints to the already complex scheduling algorithm.

However, according to the invention, in a cluster including a large number of computers, it becomes interesting to manage the cluster operation according to the matching between running jobs and available resources evolving over time. Besides, improving scheduling is not that difficult when including as parameter the evolving matching between running jobs and available resources. Moreover, when managing this supplementary parameter the right way, such difficulty can be substantially lowered and even cancelled, while cost savings, because of inclusion of this supplementary parameter, become substantial in a cluster comprising a big number of computers.

U.S. Patent Application Publication No. 2017/109199 A1 discusses a method of scheduling multi-phase computing jobs. U.S. Patent Application Publication No. 2016/283270 A1 discusses a method of selecting resource allocation policies and resolving resource conflicts.

### SUMMARY OF THE INVENTION

The object of the present invention is to alleviate at least partly the above-mentioned drawbacks.

More particularly, the invention, when scheduling tasks in a computers cluster, and especially in a cluster including many computers, aims to take into account the matching between running jobs and available resources evolving over time, in order to improve tasks scheduling. Such matching between running jobs and available resources evolving over time is taken into account by generating corresponding profiling data. Those profiling data are used by machine learning. Although matching between running jobs and available resources evolves over time, it usually does not evolve in an erratic way, but on the contrary, at least some of the tasks to be scheduled are more or less repetitive or at least exhibit some repetitive parts or are partly repetitive. This use of profiling data by machine learning, when scheduling tasks in a computers cluster, and especially in a cluster including many computers, is all the more efficient as the tasks to be scheduled are more repetitive.

This object is achieved with a method of managing the providing of resources in a computer cluster running jobs as set forth in the appended claims which is provided according to an aspect of the present subject disclosure.

According to another aspect of the present subject disclosure, a system as set forth in the appended claims is also provided.

In embodiments, the proposed method of managing the providing of resources in a computer cluster running jobs comprises: a process of scheduling tasks running jobs and utilizing resources in the cluster, a process of profiling, analyzing said jobs running and said resources utilizing, generating, based on said analyzing, jobs profiling data comprising: jobs type characterizing and/or modeling data, jobs running efficiency as a function of resources sharing between running jobs, a process of machine learning, improving said process of scheduling tasks, based on said profiling data and on past scheduled tasks analysis, said process of scheduling tasks taking into account said tasks scheduling process improving and actual state of the cluster.

In order to reach the most efficient use of profiling data by machine learning, when scheduling tasks in a computers cluster, and especially in a cluster including many computers, according to some embodiments of the invention, preferably, at least part of running jobs, preferably most of running jobs, more preferably all of running jobs, are repetitive jobs.

Preferred embodiments comprise one or more of the following features, which can be taken separately or together, either in partial combination or in full combination.

Said process of scheduling tasks takes into account said tasks scheduling process improving and actual state of the cluster for dynamically adapting tasks scheduling during actual jobs running. This way, resources sharing between running jobs is also dynamically improved and optimized in order to dynamically improve jobs running efficiency.

Said process of scheduling tasks favors simultaneous scheduling of different tasks respectively using different types of resources. This is a simple and very efficient way to improve resources sharing between running jobs, especially when such resources are limited and when the number of terminal nodes in the cluster is high.

Said process of scheduling tasks favors simultaneous scheduling of a first task requiring essentially or exclusively central processing unit resources together with a second task requiring essentially or exclusively input and/or output storing resources, preferably as much as possible between most of or all of running jobs. This way, resources sharing between running jobs is more efficiently optimized since simultaneously running jobs use completely different resources, thereby completely cancelling collision risk when trying and accessing resources.

Preferably, said process of profiling executes an initial profiling phase comprising running at least several jobs with different runtime configurations for each one of said several jobs, and preferably comprising running all jobs with different runtime configurations for each one of said all jobs. This way, machine learning starts with good and already somewhat optimized data, so as to converge quickly over time to fully optimized predictions of jobs running efficiency as a function of resources sharing between running jobs.

Said process of scheduling tasks sends scheduling decisions to said cluster, whereas said cluster sends back jobs status to said process of scheduling tasks, including job running status or job terminated status. Thereby, scheduling tasks process has a nearly real time practically complete status of cluster allowing it to better perform real time optimization of its scheduling strategy.

Said process of machine learning sends predictions of jobs running efficiency as a function of resources sharing between running jobs to said process of scheduling tasks, whereas said process of scheduling tasks sends back usefulness of said predictions for scheduling performances improving. This feedback based on usefulness back sending allows machine learning to more quickly learn and to more quickly converge towards good and optimized predictions of jobs running efficiency as a function of resources sharing between running jobs.

To take into account the type of jobs to be run and the jobs running efficiency as a function of resources sharing between running jobs, in an even more efficient manner, what means in order to improve tasks scheduling, is achieved by adding other supplementary technical features which allow the process of machine learning sending predictions of jobs running efficiency as a function of resources sharing between running jobs, to improve over time until it becomes fully efficient and anyway more efficient than a tasks scheduling process which would not be aware of those predictions. Indeed, the usefulness back sending being based on scheduling performances rather than on prediction precision, the scheduling performances will quickly improve over time. According to embodiments of the invention, it has been discovered that basing this usefulness back sending on scheduling performances rather than on price prediction precision (as it would seem more natural), is astonishingly globally more efficient, and more quickly efficient during the learning progress of the jobs running efficiency as a function of resources sharing between running jobs prediction process.

This is achieved with a managing method, wherein said usefulness back sending, to said process of machine learning, is based on an evaluation of scheduling performances in said computers cluster more than on an evaluation, if any, of jobs running efficiency as a function of resources sharing between running jobs prediction precision.

To continue to improve the efficiency of the learning progress of the jobs running efficiency as a function of resources sharing between running jobs prediction process, this usefulness back sending is done through a cost function.

Preferably, said usefulness back sending, to said process of prediction of jobs running efficiency as a function of resources sharing between running jobs, updates a cost function of said process of prediction of jobs running efficiency as a function of resources sharing between running jobs which is based on an evaluation of scheduling performances in said computers cluster more than on an evaluation, if any, of jobs running efficiency as a function of resources sharing between running jobs prediction precision.

To still continue to improve the efficiency of the learning progress of the jobs running efficiency as a function of resources sharing between running jobs prediction process, this usefulness back sending is exclusively based on scheduling performances and not at all on jobs running efficiency as a function of resources sharing between running jobs prediction precision.

Preferably, said feedback, to said process of prediction of electricity price, is based on an evaluation of scheduling performances in said computers cluster, and not on an evaluation of jobs running efficiency as a function of resources sharing between running jobs prediction precision.

Preferably, according to an embodiment of the invention, at least one of said prediction processes, preferably both said prediction processes, are based on using support vector machines.

Preferably, according to an alternative embodiment of the invention, at least one of said prediction processes, preferably both said prediction processes, are based either on using a supervised learning algorithm, preferably a nearest neighbor algorithm or a random forest algorithm, or on using a deep learning algorithm.

Preferably, said process of profiling sends said profiling data to said process of machine learning, whereas there is no direct feedback from said process of machine learning to said process of profiling. Those profiling data allow machine learning to quickly and efficiently learn about the structure and the working of the cluster in order to more efficiently reach precise and useful predictions of jobs running efficiency as a function of resources sharing between running jobs, thereby improving quickly and deeply the scheduling of tasks, which is an interesting parameter of a good management of a cluster where many running jobs share a rather limited amount of resources.

Preferably, said process of profiling uses external sensors, among which external sensors there is or are preferably one or more power sensors and/or one or more temperature sensors. These external sensors will give useful information in order to know whether such or such resource is sufficiently used at a time or whether such or such resource is overused at another time. Preferably, these external sensors are integrated within the motherboard.

Preferably, said process of scheduling tasks tunes resources parameters when allocating said resources to running jobs to improve scheduling performances. This is a deeper level of tasks scheduling improvement, where not only is the resources sharing between running jobs improved, but also a resource once temporarily dedicated to a running job is also adapted and tuned to the running job it has just been dedicated.

Preferably, said process of scheduling tasks tunes resources parameters among which: Central Processing Unit speed, and/or network communication bandwidth, and/or input/output storing access speed, and/or Random Access Memory capacity. These resources tuning parameters are the most useful and the most cost effective for tasks scheduling improvement.

Preferably, at least part of running jobs are meteorological calculations and predictions. The meteorological calculations and predictions are huge tasks but are very repetitive tasks; therefore, the method of managing resources providing according to the invention is most efficient in that situation.

Preferably, said cluster comprises more than 1000 terminal nodes, preferably more than 10000 terminal nodes. Managing resources providing method is all the more interesting that the number of terminal nodes in the clusters is important, since this makes all the more critical the limited resources sharing strategy.

Preferably, said taking into account actual state of the cluster includes first sensing an actual workload in said cluster and making one or more future workload predictions and second taking into account said sensed actual workload and said future workload prediction(s).

While the type of jobs to be run and the jobs running efficiency as a function of resources sharing between running jobs evolves in time, the computing resource demands also evolve in time. Not only the number of tasks but also their characteristics, as for example computing resources needed, preferred or final deadlines, will change over time. Including the prediction of these different aspects in the managing method according to embodiments of the invention will improve performance of the whole system.

Preferably, said actual workload evolves over time, not only the number of tasks to be computed evolves over time, but also the computed resources required by said tasks and the deadlines of said tasks evolve over time.

Thereby, this parameter of actual workload is quite representative of the complexity of the computing cluster to manage.

Preferably, according to an embodiment of the invention, said process of scheduling tasks is based on using a greedy algorithm, preferably a Backfilling algorithm.

Preferably, according to an alternative embodiment of the invention, said process of scheduling tasks is based on using an integer programming algorithm.

Further features and advantages of the invention will appear from the following description of embodiments of the invention, given as nonlimiting examples, with reference to the accompanying drawings listed hereunder.

### BRIEF DESCRIPTION OF THE DRAWINGS

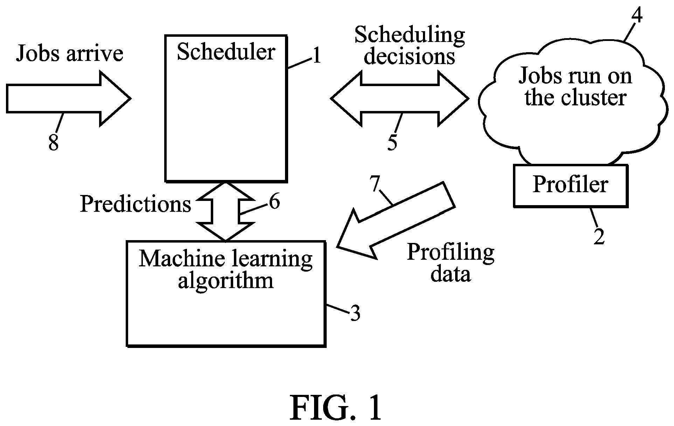

Fig. 1 shows an example of a system showing the processes used by the managing method according to an embodiment of the invention, and the progress of their interaction.

### DETAILED DESCRIPTION OF THE INVENTION

Fig. 1 shows an example of a system showing the processes used by the managing method according to an embodiment of the invention, and the progress of their interaction.

The system managing the resources providing comprises three main components which are a scheduler 1, a profiler 2 integrated into a cluster 4, a machine learning algorithm 3.

There is a bidirectional communication 5 between the scheduler 1 and the cluster 4. There is a bidirectional communication 6 between the scheduler 1 and the machine learning algorithm 3. There is a unidirectional communication 7 from the profiler 2 towards the machine learning algorithm 3. The communication between the scheduler 1, the profiler 2, the machine learning algorithm 3 and the cluster 4, is an interesting point of the system managing resources providing in the cluster 4. The machine learning algorithm 3 making predictions not only makes these predictions but also receives from the scheduler 1 how helpful these predictions have been for improving the scheduling performances. A queue of jobs to be scheduled by the scheduler 1 is shown by an arrow 8.

The profiler 2 executes an initial profiling phase comprising running at least several jobs with different runtime configurations for each one of said several jobs in cluster 4, and comprising running all jobs with different runtime configurations for each one of said all jobs. The machine learning algorithm thereby starts with good and already somewhat optimized data, so as to converge quickly over time to fully optimized predictions of jobs running efficiency as a function of resources sharing between running jobs.

During the bidirectional communication 5, the scheduler 1 sends scheduling decisions to the cluster 4, whereas the cluster 4 sends back jobs status to the scheduler **1,** including job running status or job terminated status. Thereby, the scheduler 1 has a nearly real time practically complete status of the cluster 4 allowing it to better perform real time optimization of its scheduling strategy.

During the bidirectional communication 6, the machine learning algorithm 3 sends predictions of jobs running efficiency as a function of resources sharing between running jobs to the scheduler 1, whereas this scheduler 1 sends back usefulness of said predictions for scheduling performances improving. This feedback based on usefulness back sending allows for the machine learning algorithm 3 to more quickly learn and to more quickly converge towards good and optimized predictions of jobs running efficiency as a function of resources sharing between running jobs.

The scheduler 1 gives a feedback to the machine learning algorithm 3, this feedback being based rather on scheduling performances than on prediction precisions. Scheduling performances may include, for example, the percentage of required tasks which has been performed, as well as the delays (or periods in advance, if appropriate) with which those tasks have been performed, and the completeness with which these tasks have been performed.

The scheduler 1 schedules tasks within the computers cluster 4 and measures or determines the scheduling performances of a batch of tasks which have been performed within a given time frame.

Both via bidirectional communications 5 and 6, the machine learning algorithm 3 learns from the profiling data generated by the profiler 2 and from the past scheduling decisions how to improve the scheduling. This machine learning algorithm 3 deduces possible schedule combinations of multiple jobs in the same time in a way that the resources are optimally used for each time period.

Both via bidirectional communications 5 and 6, the scheduler 1 takes into account both predictions made by the machine learning algorithm 3 and the actual state of the system to make scheduling decisions. For example the scheduler 1 will schedule Central Processing Unit bound jobs concurrently with Input Output bound jobs or adapt the scheduling and runtime in a way that the Central Processing Unit phase of a first job takes place concurrently with the Input Output phase of a second job.

During the unidirectional communication 7, the profiler 2 sends profiling data to the machine learning algorithm 3, whereas there is no direct feedback from the machine learning algorithm 3 to the profiler 2. Those profiling data allow the machine learning algorithm 3 to quickly and efficiently learn about the structure and the working of the cluster 4 in order to more efficiently reach precise and useful predictions of jobs running efficiency as a function of resources sharing between running jobs, thereby improving quickly and deeply the scheduling of tasks, which is an interesting parameter of a good management of a cluster 4 where many running jobs share a rather limited amount of resources.

By being integrated within the cluster 4, the profiler 2 analyzes the behavior of the jobs running on the cluster 4 with a focus on the resources consumption and the jobs characterization.

The predictions of jobs running efficiency as a function of resources sharing between running jobs made by the machine learning algorithm 3, can be support vector machines where the input is historical values of profiling data. This machine learning algorithm 3 making such predictions learns from historical values by assigning new inputs into one category or the other. The number of categories can be very large making these predictions able to predict real numbers with a good precision. The future workload predictions can be processed in a similar way.

The cost function of these predictions is based on the evaluation of the scheduling performances, instead of being based on the precision of their predictions.

As an alternative, these predictions may use supervised learning algorithm, like nearest neighbor algorithm or random forest algorithm. Deep learning algorithms can also be used instead.

The scheduler 1 can use a modified version of the backfilling algorithm. This family of greedy algorithms is fast and powerful enough to fulfill the requirements of the managing method according to embodiments of the invention.

As an alternative, the scheduler 1 may use in some cases an integer programming algorithm, even if it is notably slower.

The invention has been described with reference to preferred embodiments.

## Claims

1. A method of managing the providing of resources in a computer cluster (4), the method comprising, the computer cluster (4) running jobs:
➢ a process of scheduling tasks comprising: scheduling tasks for running the jobs and using the resources in the computer cluster (4), and receiving, from the computer cluster (4), job status data representing a current status of the jobs in the computer cluster (4);
➢ a process of profiling, comprising:
▪ analyzing the running of the jobs and the using of the resources, and
▪ generating, based on said analyzing, jobs profiling data, the jobs profiling data comprising jobs type characterizing and/or modeling data, and jobs running efficiency data expressed as a function of resources sharing between running jobs; and
➢ a process of machine learning comprising: generating, based on said jobs profiling data and on past scheduled tasks analysis, a prediction of jobs running efficiency as a function of resources sharing between running jobs, and providing the prediction of jobs running efficiency to the process of scheduling tasks for improving said process of scheduling tasks,
wherein said process of scheduling tasks is configured for performing improved scheduling of tasks within the computer cluster (4) which takes into account the prediction of jobs running efficiency and the job status data.

2. The method of managing the providing of resources in a computer cluster (4) according to claim 1, wherein said process of scheduling tasks takes into account said tasks scheduling process improving and the actual state of the cluster (4) for dynamically adapting tasks scheduling during actual jobs running,
and wherein said taking into account actual state of the cluster (4) comprises: sensing an actual workload in said cluster (4) and making one or more future workload predictions, and taking into account said sensed actual workload and said one or more future workload predictions.

3. The method of managing the providing of resources in a computer cluster (4) according to any of the preceding claims, wherein said process of scheduling tasks favors simultaneous scheduling of different tasks respectively using different types of resources.

4. The method of managing the providing of resources in a computer cluster (4) according to any of the preceding claims, wherein said process of profiling further comprises: executing an initial profiling phase comprising running at least several jobs with different runtime configurations for each one of said several jobs.

5. The method of managing the providing of resources in a computer cluster (4) according to any of the preceding claims, wherein:
➢ said process of scheduling tasks further comprises: sending scheduling decisions to said computer cluster (4), and
➢ the method further comprising: sending back, by the computer cluster (4), jobs status to said process of scheduling tasks (1), including job running status or job terminated status.

6. The method of managing the providing of resources in a computer cluster (4) according to any of the preceding claims, wherein: said process of machine learning further comprises: sending predictions of jobs running efficiency as a function of resources sharing between running jobs to said process of scheduling tasks (1), and said process of scheduling tasks further comprises: sending back usefulness of said predictions for scheduling performances improving.

7. The method of managing the providing of resources in a computer cluster (4) according to claim 6, wherein at least one of said predictions are based on using support vector machines, or are based either on using a supervised learning algorithm or on using a deep learning algorithm.

8. The method of managing the providing of resources in a computer cluster (4) according to any of the preceding claims, wherein said process of profiling uses external sensors.

9. The method of managing the providing of resources in a computer cluster (4) according to any of the preceding claims, wherein at least part of running jobs are repetitive jobs.

10. The method of managing the providing of resources in a computer cluster (4) according to any of the preceding claims, wherein said process of scheduling tasks further comprises: tuning resources parameters when allocating said resources to running jobs to improve scheduling performances.

11. The method of managing the providing of resources in a computer cluster (4) according to any of the preceding claims, wherein at least part of running jobs are meteorological calculations and predictions.

12. The method of managing the providing of resources in a computer cluster (4) according to any of the preceding claims, wherein said computer cluster (4) comprises more than 1000 terminal nodes.

13. The method of managing the providing of resources in a computer cluster (4) according to any of claims 3 - 12 considered in combination with claim 2, wherein based on said actual workload evolving over time, a number of tasks to be computed evolves over time and a computed resources required by said tasks and deadlines of said tasks evolve over time.

14. The method of managing the providing of resources in a computer cluster (4) according to any of the preceding claims, wherein said process of scheduling tasks is based on using a greedy algorithm, or an integer programming algorithm.

15. A system comprising a computer cluster (4) configured for running jobs, and further comprising:
A scheduler (1) configured to perform a process of scheduling tasks according to the method of any of claims 1 - 14;
A profiler (2) configured to perform a process of profiling according to the method of any of claims 1 - 14; and
A machine learning algorithm (3) configured to perform a process of machine learning according to the method of any of claims 1 - 14.

## Patentansprüche

1. Verfahren zum Verwalten der Bereitstellung von Ressourcen in einem Computercluster (4), wobei das Verfahren umfasst, dass der Computercluster (4) Jobs ausführt:
➢ einen Prozess eines Planens von Aufgaben, welcher umfasst: Planen von Aufgaben zum Ausführen der Jobs und zum Verwenden der Ressourcen in dem Computercluster (4), und Empfangen, von dem Computercluster (4), von Job-Statusdaten, welche einen aktuellen Status der Jobs in dem Computercluster (4) repräsentieren;
➢ einen Prozess eines Profilierens, welcher umfasst:
▪ Analysieren des Ausführens der Jobs und des Verwendens der Ressourcen, und
▪ Erzeugen, auf Grundlage des Analysierens, von Job-Profilierungsdaten, wobei die Job-Profilierungsdaten Daten zur Charakterisierung und/oder Modellierung von Job-Typen sowie Daten zur Ausführungseffizienz von Jobs umfassen, welche als Funktion der gemeinsamen Nutzung von Ressourcen zwischen ausgeführten Jobs ausgedrückt sind; und
➢ einen Prozess eines maschinellen Lernens, welcher umfasst: Erzeugen, auf Grundlage der Job-Profilierungsdaten und einer Analyse vergangener geplanter Aufgaben, einer Vorhersage der Ausführungseffizienz von Jobs als Funktion der gemeinsamen Nutzung von Ressourcen zwischen ausgeführten Jobs, und Bereitstellen der Vorhersage der Ausführungseffizienz von Jobs an den Prozess eines Planens von Aufgaben zur Verbesserung des Prozesses eines Planens von Aufgaben,
wobei der Prozess eines Planens von Aufgaben dazu eingerichtet ist, eine verbesserte Planung von Aufgaben innerhalb des Computerclusters (4) durchzuführen, welche die Vorhersage der Ausführungseffizienz von Jobs und die Job-Statusdaten berücksichtigt.

2. Verfahren zum Verwalten der Bereitstellung von Ressourcen in einem Computercluster (4) nach Anspruch 1, wobei der Prozess eines Planens von Aufgaben den Aufgabenplanungs-Verbesserungsprozess und den tatsächlichen Zustand des Clusters (4) berücksichtigt, um die Aufgabenplanung während des tatsächlichen Ausführens von Jobs dynamisch anzupassen,
und wobei das Berücksichtigen des tatsächlichen Zustands des Clusters (4) umfasst: Erfassen einer tatsächlichen Arbeitslast in dem Cluster (4) und Erstellen einer oder mehrerer Vorhersagen zukünftiger Arbeitslast, und Berücksichtigen der erfassten tatsächlichen Arbeitslast und der einen oder mehreren Vorhersagen zukünftiger Arbeitslast.

3. Verfahren zum Verwalten der Bereitstellung von Ressourcen in einem Computercluster (4) nach einem der vorhergehenden Ansprüche, wobei der Prozess eines Planens von Aufgaben ein gleichzeitiges Planen unterschiedlicher Aufgaben bevorzugt, welche jeweils unterschiedliche Ressourcentypen verwenden.

4. Verfahren zum Verwalten der Bereitstellung von Ressourcen in einem Computercluster (4) nach einem der vorhergehenden Ansprüche, wobei der Prozess eines Profilierens ferner umfasst: Ausführen einer anfänglichen Profilierungsphase, welche das Ausführen wenigstens mehrerer Jobs mit unterschiedlichen Laufzeitkonfigurationen für jeden der mehreren Jobs umfasst.

5. Verfahren zum Verwalten der Bereitstellung von Ressourcen in einem Computercluster (4) nach einem der vorhergehenden Ansprüche, wobei:
➢ der Prozess eines Planens von Aufgaben ferner umfasst: Senden von Planungsentscheidungen an den Computercluster (4), und
➢ das Verfahren ferner umfasst: Zurücksenden, durch den Computercluster (4), des Job-Status an den Prozess eines Planens von Aufgaben (1), einschließlich des Job-Ausführungsstatus oder des Job-Beendigungsstatus.

6. Verfahren zum Verwalten der Bereitstellung von Ressourcen in einem Computercluster (4) nach einem der vorhergehenden Ansprüche, wobei: der Prozess eines maschinellen Lernens ferner umfasst: Senden von Vorhersagen der Ausführungseffizienz von Jobs als Funktion der gemeinsamen Nutzung von Ressourcen zwischen ausgeführten Jobs an den Prozess eines Planens von Aufgaben (1), und der Prozess eines Planens von Aufgaben ferner umfasst: Zurücksenden der Nützlichkeit der Vorhersagen zur Verbesserung der Planungsleistung.

7. Verfahren zum Verwalten der Bereitstellung von Ressourcen in einem Computercluster (4) nach Anspruch 6, wobei wenigstens eine der Vorhersagen auf der Verwendung von Support-Vektor-Maschinen basiert, oder entweder auf der Verwendung eines überwachten Lernalgorithmus oder auf der Verwendung eines Deep-Learning-Algorithmus basiert.

8. Verfahren zum Verwalten der Bereitstellung von Ressourcen in einem Computercluster (4) nach einem der vorhergehenden Ansprüche, wobei der Prozess eines Profilierens externe Sensoren verwendet.

9. Verfahren zum Verwalten der Bereitstellung von Ressourcen in einem Computercluster (4) nach einem der vorhergehenden Ansprüche, wobei wenigstens ein Teil der ausgeführten Jobs wiederkehrende Jobs sind.

10. Verfahren zum Verwalten der Bereitstellung von Ressourcen in einem Computercluster (4) nach einem der vorhergehenden Ansprüche, wobei der Prozess eines Planens von Aufgaben ferner umfasst: Abstimmen von Ressourcenparametern bei der Zuweisung der Ressourcen an ausgeführte Jobs zur Verbesserung der Planungsleistung.

11. Verfahren zum Verwalten der Bereitstellung von Ressourcen in einem Computercluster (4) nach einem der vorhergehenden Ansprüche, wobei wenigstens ein Teil der ausgeführten Jobs meteorologische Berechnungen und Vorhersagen sind.

12. Verfahren zum Verwalten der Bereitstellung von Ressourcen in einem Computercluster (4) nach einem der vorhergehenden Ansprüche, wobei der Computercluster (4) mehr als 1000 Endknoten umfasst.

13. Verfahren zum Verwalten der Bereitstellung von Ressourcen in einem Computercluster (4) nach einem der Ansprüche 3 bis 12, betrachtet in Kombination mit Anspruch 2, wobei sich, auf Grundlage der sich im Laufe der Zeit entwickelnden tatsächlichen Arbeitslast, eine Anzahl zu berechnender Aufgaben im Laufe der Zeit entwickelt und sich von den Aufgaben benötigten berechneten Ressourcen sowie Fristen der Aufgaben im Laufe der Zeit entwickeln.

14. Verfahren zum Verwalten der Bereitstellung von Ressourcen in einem Computercluster (4) nach einem der vorhergehenden Ansprüche, wobei der Prozess eines Planens von Aufgaben auf der Verwendung eines Greedy-Algorithmus oder eines Algorithmus der ganzzahligen Programmierung basiert.

15. System, welches einen Computercluster (4) umfasst, welcher dazu eingerichtet ist, Jobs auszuführen, und welches ferner umfasst:
einen Scheduler (1), welcher dazu eingerichtet ist, einen Prozess eines Planens von Aufgaben nach dem Verfahren nach einem der Ansprüche 1 bis 14 durchzuführen;
einen Profiler (2), welcher dazu eingerichtet ist, einen Prozess eines Profilierens nach dem Verfahren nach einem der Ansprüche 1 bis 14 durchzuführen; und
einen Algorithmus des maschinellen Lernens (3), welcher dazu eingerichtet ist, einen Prozess eines maschinellen Lernens nach dem Verfahren nach einem der Ansprüche 1 bis 14 durchzuführen.

## Revendications

1. Procédé de gestion de fourniture de ressources dans une grappe (4) d'ordinateurs, le procédé comprenant, pour des travaux en cours d'exécution par la grappe (4) d'ordinateurs :
➢ un processus de planification de travaux comprenant : la planification de tâches pour l'exécution des travaux et l'utilisation des ressources dans la grappe (4) d'ordinateurs, et la réception, en provenance de la grappe (4) d'ordinateurs, de données d'état de travaux représentant un état actuel des travaux dans la grappe (4) d'ordinateurs ;
➢ un processus de profilage, comprenant :
▪ l'analyse de l'exécution des travaux et de l'utilisation des ressources, et
▪ la génération, sur la base de ladite analyse, de données de profilage de travaux, les données de profilage de travaux comprenant des données de caractérisation et/ou de modélisation de type de travaux, et de données d'efficacité d'exécution de travaux exprimées comme étant fonction du partage de ressources entre des travaux en cours d'exécution ; et
➢ un processus d'apprentissage automatique comprenant : la génération, sur la base desdites données de profilage de travaux et sur une analyse de tâches planifiées passées, d'une prédiction d'efficacité d'exécution de travaux en fonction du partage de ressources entre des travaux en cours d'exécution, et la fourniture de la prédiction d'efficacité d'exécution de travaux au processus de planification de tâches pour améliorer ledit processus de planification de tâches,
dans lequel ledit processus de planification de tâches est configuré pour effectuer une planification de tâches améliorée au sein de la grappe (4) d'ordinateurs qui prend en compte la prédiction de l'efficacité d'exécution de travaux et les données d'état de travaux.

2. Procédé de gestion de fourniture de ressources dans une grappe (4) d'ordinateurs selon la revendication 1, dans lequel ledit processus de planification de tâches prend en compte l'amélioration dudit processus de planification de tâches et l'état réel de la grappe (4) pour adapter dynamiquement la planification de tâches pendant l'exécution réelle de travaux,
et dans lequel ladite prise en compte de l'état réel de la grappe (4) comprend : la détection d'une charge de travail réelle dans ladite grappe (4) et la réalisation d'une ou plusieurs prédictions de charge de travail future, et la prise en compte de ladite charge de travail réelle détectée et desdites une ou plusieurs prédictions de charge de travail future.

3. Procédé de gestion de fourniture de ressources dans une grappe (4) d'ordinateurs selon l'une quelconque des revendications précédentes, dans lequel ledit processus de planification de tâches favorise la planification simultanée de différentes tâches utilisant respectivement différents types de ressources.

4. Procédé de gestion de fourniture de ressources dans une grappe (4) d'ordinateurs selon l'une quelconque des revendications précédentes, dans lequel ledit processus de profilage comprend en outre : l'exécution d'une phase de profilage initiale comprenant l'exécution d'au moins plusieurs travaux avec différentes configurations d'exécution pour chacun desdits plusieurs travaux.

5. Procédé de gestion de fourniture de ressources dans une grappe (4) d'ordinateurs selon l'une quelconque des revendications précédentes, dans lequel :
> ledit processus de planification de tâches comprend en outre : l'envoi de décisions de planification à ladite grappe (4) d'ordinateurs, et
➢ le procédé comprenant en outre : le renvoi, par la grappe (4) d'ordinateurs, d'un état de travaux audit processus de planification de tâches (1), comportant un état d'exécution de travail ou un état de fin de travail.

6. Procédé de gestion de fourniture de ressources dans une grappe (4) d'ordinateurs selon l'une quelconque des revendications précédentes, dans lequel : ledit processus d'apprentissage automatique comprend en outre : l'envoi de prédictions d'efficacité d'exécution de travaux en fonction du partage de ressources entre des travaux en cours d'exécution audit processus de planification de tâches (1), et ledit processus de planification de tâches comprend en outre : le renvoi de l'utilité desdites prédictions pour l'amélioration des performances de planification.

7. Procédé de gestion de fourniture de ressources dans une grappe (4) d'ordinateurs selon la revendication 6, dans lequel au moins l'une desdites prédictions est basée sur l'utilisation de machines de vecteur de support, ou est basée soit sur l'utilisation d'un algorithme d'apprentissage supervisé, soit sur l'utilisation d'un algorithme d'apprentissage profond.

8. Procédé de gestion de fourniture de ressources dans une grappe (4) d'ordinateurs selon l'une quelconque des revendications précédentes, dans lequel ledit processus de profilage utilise des capteurs externes.

9. Procédé de gestion de fourniture de ressources dans une grappe (4) d'ordinateurs selon l'une quelconque des revendications précédentes, dans lequel au moins une partie des travaux en cours d'exécution sont des travaux répétitifs.

10. Procédé de gestion de fourniture de ressources dans une grappe (4) d'ordinateurs selon l'une quelconque des revendications précédentes, dans lequel ledit processus de planification de tâches comprend en outre : l'ajustement des paramètres de ressources lors de l'attribution desdites ressources à des travaux d'exécution pour améliorer les performances de planification.

11. Procédé de gestion de fourniture de ressources dans une grappe (4) d'ordinateurs selon l'une quelconque des revendications précédentes, dans lequel au moins une partie des travaux en cours d'exécution sont des calculs et des prédictions météorologiques.

12. Procédé de gestion de fourniture de ressources dans une grappe (4) d'ordinateurs selon l'une quelconque des revendications précédentes, dans lequel ladite grappe (4) d'ordinateurs comprend plus de 1000 nœuds terminaux.

13. Procédé de gestion de fourniture de ressources dans une grappe (4) d'ordinateurs selon l'une quelconque des revendications 3 à 12 considérées en combinaison avec la revendication 2, dans lequel sur la base de ladite charge de travail réelle évoluant au fil du temps, un nombre de tâches à calculer évolue au fil du temps et des ressources calculées requises par lesdites tâches et des délais desdites tâches évoluent au fil du temps.

14. Procédé de gestion de fourniture de ressources dans une grappe (4) d'ordinateurs selon l'une quelconque des revendications précédentes, dans lequel ledit processus de planification de tâches est basé sur l'utilisation d'un algorithme glouton, ou d'un algorithme de programmation en nombres entiers.

15. Système comprenant une grappe (4) d'ordinateurs configurée pour exécuter des travaux, et comprenant en outre :
un planificateur (1) configuré pour effectuer un processus de planification de tâches conformément au procédé selon l'une quelconque des revendications 1 à 14 ;
un profileur (2) configuré pour effectuer un processus de profilage conformément au procédé selon l'une quelconque des revendications 1 à 14 ; et
un algorithme d'apprentissage automatique (3) configuré pour effectuer un processus d'apprentissage automatique conformément au procédé selon l'une quelconque des revendications 1 à 14.
